# EUROPEAN PATENT APPLICATION

(11) **EP 2 343 176 A1**
(43) Date of publication of application: **13.07.2011**
(21) Application number: 10150412.4
(22) Date of filing: 11.01.2010
(51) Int. Cl.: B29C 45/26, B29C 45/34, B29C 45/36, B29C 45/43

(54) **Injection mold stack and molding apparatus**

(71) Applicant: LA SEDA DE BARCELONA S.A., 08820 El Prat De Llobregat, Barcelona (ES)
(72) Inventor: Duchateau, Roald, 2930 Brasschaat (BE)
(74) Representative: Matkowska, Franck

(57) **Abstract**

The injection mold stack (IMS) comprises a core assembly (1) and a cavity assembly (2) that comprises a cavity insert (21) and a neck ring (22). The cavity insert (21) comprises a first front locking cavity (211) of conical shape. The neck ring (22) comprises a first rear male locking portion (221) of conical shape, a second front locking cavity (226) of conical shape and a front male locking portion (227) of conical shape. The core assembly (1) comprises a second rear male locking portion (112) of conical shape and a rear annular cavity (113) of conical shape that surrounds the second rear male locking portion (112). The first conical rear male locking portion (221) and the first conical front locking cavity (211) are adapted to align and lock the neck ring (22) with the cavity insert (211) by translating longitudinally the neck ring (22) towards the cavity insert (21) or vice versa, so that the first conical rear male locking portion (221) is fitted into the first conical front locking cavity (211). The second conical front locking cavity (226), the conical front male locking portion (227), the second conical rear male locking portion (112) and the conical annular rear cavity (113) are adapted to align and lock the core assembly (1) with the neck ring (22) by translating longitudinally the core assembly (1) towards the neck ring (22) or vice versa, so that the second conical rear male locking portion (112) is fitted into the second conical front locking cavity (226) and the conical front male locking portion (227) is fitted into the conical rear annular cavity (113).

## Description

### Technical field

The present invention relates to a novel injection mold stack and to a molding apparatus comprising this mold stack. This molding apparatus can be used in the field of plastic industry for manufacturing molded articles, and in particular plastic preforms that are adapted to be subsequently stretched into a rigid hollow article.

### Prior art

A typical molding apparatus comprises an injection unit and an injection mold stack. The injection unit is used for injecting one or several melted thermoplastic materials under pressure into one or several molding cavities of the mold stack. This injection unit can be of a reciprocating screw type or of a two-stage type.

Different types of injection mold stacks are described in PCT application WO-A-2009/030018 to Husky Injection Molding Systems Ltd, which is incorporated therein by reference.

An injection mold stack generally includes a core assembly and a cavity assembly comprising a gate insert, a cavity insert, and a neck ring. In use, a core of the core assembly is positioned inside the cavity assembly, and delimits a molding cavity with the neck ring, the cavity insert and the gate insert, said molding cavity having the shape of the injection-molded article. During the injection process, the core assembly and the cavity assembly are aligned and are held together by a clamp force that has to be sufficiently strong for withstanding the pressure of the injected plastic material. Once the article is being molded and cooled down, it has to be ejected form the mold stack. For enabling this ejection, the core assembly and the cavity assembly can be moved away from the neck ring in a longitudinal direction and the neck ring the is made of two half parts that can moved away in a lateral direction.

A first know type of injection mold stack, commonly called "core-lock type", is depicted for example on figures 1 and 4 of PCT application WO-A-2009/030018.

In a mold stack of the core-lock type, the front face of the neck ring has a conical male locking portion and the rear face of the neck ring has also a conical male locking portion. The "front" face is the face of the neck ring that is oriented towards the core assembly, and the "rear" face is the face of the neck ring that is oriented towards the cavity insert. The core assembly comprises an external lock ring whose rear face (oriented towards the neck ring) forms a conical locking cavity for receiving and locking the conical male locking portion of the front side of the neck ring. This conical locking cavity of the lock ring and the conical male locking portion of the front face of the neck ring are used for aligning and locking the neck ring with the core assembly. On the opposite side of the neck ring, the conical male locking portion of the rear face of the neck ring is used for aligning and locking the neck ring with the cavity insert.

In an injection molding stack having the particular structure of figure 1 or figure 4 of PCT application WO-A-2009/030018, air channels that are terminated by an air exhaust end positioned closed to the molded article can be advantageously drilled within the lock ring, and in use, air can be blown within these air channels for assisting the ejection of the article.

In a mold stack of the core-lock type, the neck ring can be easily and precisely aligned with the core assembly on one side and with the cavity insert on the other side. But with this type of molding stack, the height of the neck ring necessarily follows the length of the molded article, which is a limitation on the mold compactness or on the length or design of the molded articles that can be manufactured.

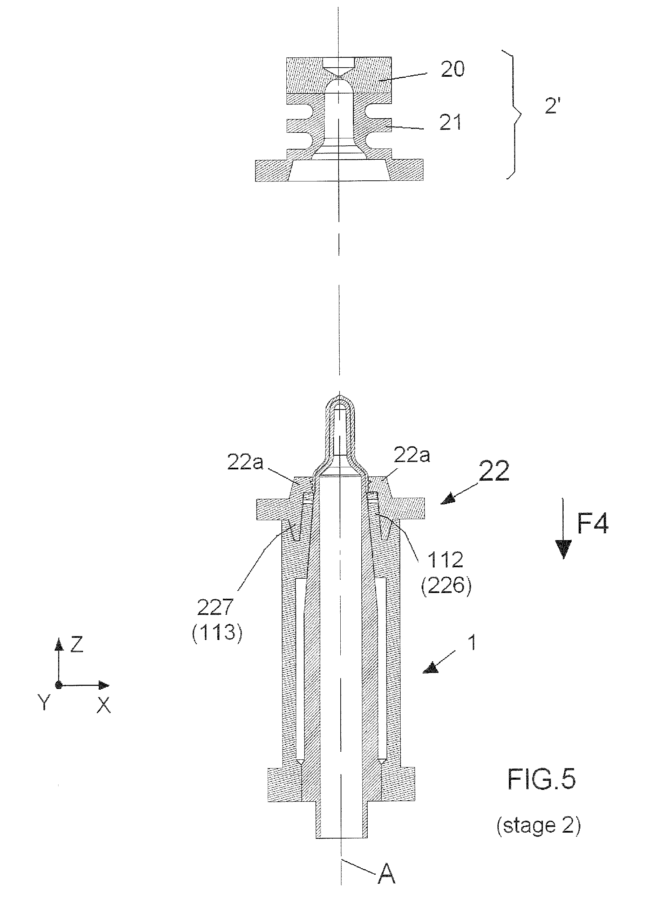

Figure 5 of PCT application WO-A-2009/030018 shows a particular embodiment of a mold stack of the core-lock type for making a molded article, like a preform, having a support ledge portion, also commonly referred as neck support ring, and wherein the support ledge portion is positioned at the junction between the neck ring and the cavity insert. With this particular configuration of figure 5, it is unfortunately not possible to have air channels that are drilled within the lock ring of the core assembly and that are adapted to blow air towards the molded article for assisting the ejection of the article.

A second known type of injection mold stack, commonly called "cavity-lock type ", is depicted for example on figure 2 of PCT application WO-A-2009/030018 .

In a mold stack of the cavity-lock type, only the rear face of the neck ring has a conical male locking portion and the front face of the neck ring forms a conical locking cavity adapted to fit the neck ring and the core assembly together. The locking of the neck ring is thus obtained only on the rear side oriented towards the cavity insert. The neck ring used in this type of mold stack is advantageously more compact than the neck ring used in a mold stack of the core-lock type, but the alignment of the neck ring with the core assembly is less precise, and the mold stack is less robust, which can lead to detrimental misalignment problems of the mold parts during the injection process. In addition, a mold stack of the cavity-lock type needs a higher clamp force for holding the mold parts together, because the contact surfaces between notably the core assembly and the neck ring are less important than in mold stack of the core-lock type.

### Objective of the invention

An objective of the invention is to propose a novel injection mold stack that overcomes both the aforesaid drawbacks of the core-lock type mold stack and drawbacks of the cavity lock-type mold stack.

### Summary of the invention

This objective is achieved by the injection mold stack of claim 1. The injection mold stack of the invention comprises a core assembly and a cavity assembly. At least a portion of the core assembly is adapted to delimit a molding cavity with the cavity assembly. The cavity assembly comprises a cavity insert and a neck ring that is positioned between the cavity insert and the core assembly. The cavity insert comprises a first front locking cavity comprising a front opening oriented towards the neck ring, and a lateral wall of conical shape whose apex is oriented towards the gate insert. The neck ring comprises a first rear male locking portion comprising an outer wall of conical shape whose apex is oriented towards the cavity insert. The said neck ring comprises a second front locking cavity and a front male locking portion. The second front locking cavity comprises a front opening oriented towards the core assembly, and a lateral wall of conical shape whose apex is oriented towards the cavity insert. The front male locking portion comprises an outer wall of conical shape, whose apex is oriented towards the core assembly, and that surrounds the second front locking cavity. The core assembly comprises a second rear male locking portion and a rear annular cavity. The second rear male locking portion comprises an outer wall of conical shape whose apex is oriented towards the neck ring. The rear annular cavity surrounds the said second rear male locking portion, and comprises an annular opening oriented towards the neck ring, and a lateral wall of conical shape whose base is oriented towards the neck ring.

The first conical rear male locking portion and the first conical front locking cavity are adapted to align and lock the neck ring with the cavity insert by translating longitudinally the neck ring towards the cavity insert or vice versa, so that the first conical rear male locking portion is fitted into the first conical front locking cavity.

The second conical front locking cavity, the conical front male locking portion, the second conical rear male locking portion and the conical annular rear cavity are adapted to align and lock the core assembly with the neck ring by translating longitudinally the core assembly towards the neck ring or vice versa, so that the second conical rear male locking portion of the core assembly is fitted into the second conical front locking cavity and the conical front male locking portion is fitted into the conical rear annular cavity.

Another object of the invention is a neck ring of an injection mold stack as defined in claim 13. This neck ring comprises a rear side and an opposite front side. Said neck ring comprises on its rear side a rear male locking portion comprising an outer wall of conical shape whose apex is oriented towards the rear side. Said neck ring comprises on its front side a front locking cavity and a front male locking portion. The front locking cavity comprises a front opening and a lateral wall of conical shape whose apex is oriented towards the rear side. The front male locking portion comprises an outer wall of conical shape, whose apex is oriented towards the front side of the neck ring, and that surrounds the front locking cavity.

Another object of the invention is a core assembly of an injection mold stack, as defined in claim 17. This core assembly comprises a rear side and an opposite front side. The core assembly comprises on its rear side a rear male locking portion, a rear annular cavity and a protruding portion that is adapted to delimit a molding cavity. The rear male locking portion comprises an outer wall of conical shape whose apex is oriented towards the rear side. The rear annular cavity surrounds the said rear male locking portion, and comprises an rear annular opening and a lateral wall of conical shape whose base is oriented towards the rear side.

Another object of the invention is a molding apparatus comprising an injection mold stack as the one previously defined, and an injection unit for injecting a melted thermoplastic material in the mold cavity of the said injection mold stack.

Another object of the invention is the use of the aforesaid injection mold stack or of the aforesaid molding apparatus for molding a plastic article, and more particularly a plastic preform.

### Brief description of the drawings

The technical characteristics and advantages of the invention will appear more clearly on reading the following detailed description of several embodiments, which embodiments are described by way of non-exhaustive and non-limiting examples, and with reference to the appended drawings, as follows:
- Figure 1 is a 3D exploded view of a first embodiment of an injection mold stack of the invention containing a molded plastic preform.

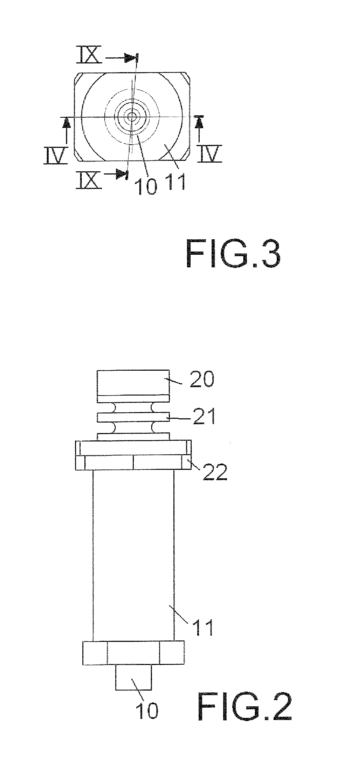

- Figure 2 is a front view of the injection mold stack of figure 1.
- Figure 3 is a right side view of the injection mold stack of figure 2.
- Figure 4 is a longitudinal cross sectional view of the injection mold stack and preform of figure 1 in plane IV-IV of figure 3, the injection mold stack being in its locked state.
- Figures 5 to 8 are longitudinal cross sectional views of the injection mold showing the main successive stages for unlocking and opening the injection mold stack of figure 4 and ejecting the molded preform.
- Figure 9 is a longitudinal cross sectional view of the injection mold stack and preform of figure 1 in plane IX-IX of figure 3, the injection mold stack being in its locked state.
- Figure 10 is an enlargement view of a zone G of the injection mold stack of figure 4.
- Figure 11 is a longitudinal cross sectional view of a second embodiment of an injection mold stack of the invention.
- Figure 12 is a longitudinal cross sectional view of a third embodiment of an injection mold stack of the invention.

### Detailed description

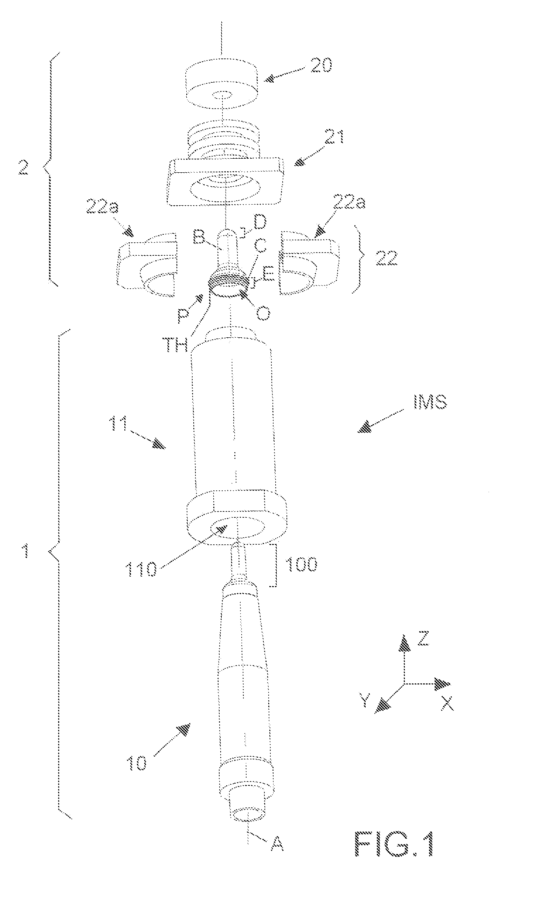

Referring to figure 1, an injection mold stack (IMS) of the invention comprises a core assembly 1 and a cavity assembly 2. The core assembly 2 comprises a core 10 and an external lock ring 11. The cavity assembly 2 comprises a gate insert 20, a cavity insert 21 and a pair of moveable half neck rings 22a adapted to form a neck ring 22 that is positioned between the cavity insert 21 and the core assembly 1.

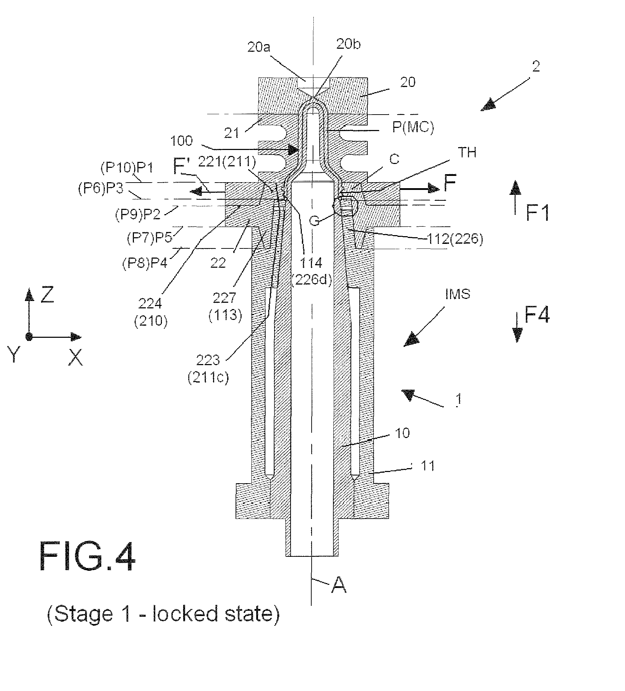

Figure 4 shows a longitudinal cross section of the injection mold stack IMS of figure 1 in its locked state. On figure 4, this injection mold stack IMS is containing a molded plastic preform P. The invention is however not limited to the molding of plastic preforms, but the injection mold stack of the invention can be adapted to mold any plastic article.

Said preform P (figures 1 and 4) knowingly comprises a tubular main body B closed at one end (hemispherical bottom end D) and a neck portion E comprising a neck support ring C, and terminated by a pouring opening O. In the particular example of figure 1, this neck portion E also comprises a threaded part TH for screwing a closure cap onto the preform P. Said preform P can be subsequently biaxially stretched in order to form a rigid hollow container, for example by using any well known stretch-blow molding technique.

In reference to figure 4, when the injection mold stack is configured in its locked state and is used to manufacture a molded preform P, the core assembly 1 (core lock 11 and core 10), and all the parts (neck ring 22, cavity insert 21, gate insert 20) of the cavity assembly 2 are aligned and have the same longitudinal central axis A. A protruding portion 100 of the core 10 is inserted within the cavity assembly 2 and delimits a molding cavity (MC) with the neck ring 22, the cavity insert 21 and the gate insert 20 of the cavity assembly 2. In figure 4, this molding cavity MC is filled with a thermoplastic material forming the preform P.

The injection under pressure of the thermoplastic material inside the molding cavity MC is performed in a standard way through the injection orifice 20b of an injection nozzle 20a of the gate insert 20. This injection nozzle 20a is knowingly assembled with the exit of a standard injection unit (not shown) that can be for example of a reciprocating screw type or of a two-stage type. The injection mold stack (IMS) and the injection unit form a molding apparatus.

The locking of the neck ring 22 on its rear side with the cavity insert 21, and on its front side with the lock ring 11 of the core assembly 1, is novel and is obtained thanks to a specific design of the lock ring 11, neck ring 22 and cavity insert 21.

### Neck ring 22

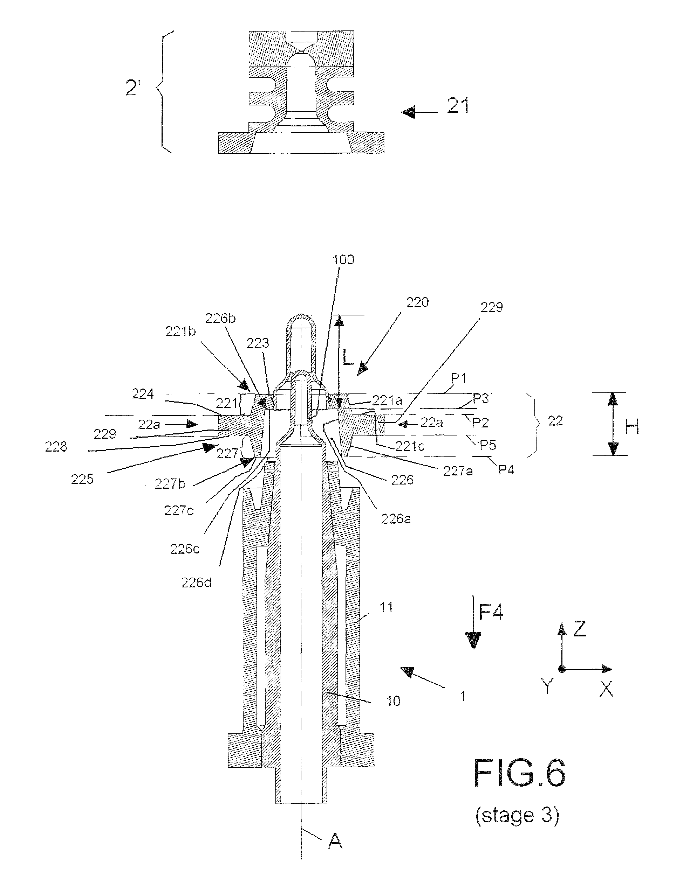

In reference to figure 6, the rear face 220 of the neck ring 22 that is oriented towards the cavity insert 21 comprises a central rear male locking portion 221 having an outer peripheral wall 221 a of conical shape aligned with the longitudinal axis A. The apex 221 b of this conical wall 221 a is oriented towards the cavity insert 21 and is extended by a rear wall 223 that is perpendicular to the longitudinal axis A and forms a first assembling plane P1. The base 221 c of this conical outer wall 221 a is oriented towards the lock ring 11 and is extended by an annular rear wall 224 that is perpendicular to the longitudinal axis A and forms a second plane P2.

In reference to figure 6, the front face 225 of the neck ring 22 (face 225 oriented towards the lock ring 11) comprises a central front locking cavity 226 that is aligned with the longitudinal axis A and a peripheral front male locking portion 227.

This central locking cavity 226 comprises a lateral wall 226a of conical shape, that is aligned with the longitudinal axis A, and whose apex 226b is oriented towards the cavity insert 21. Said apex 226b of the conical wall 226a extended by a bottom wall 226c of the central locking cavity. More particularly, in the particular example of figure 4, the bottom wall 226c of the central locking cavity defines a plane P3 that is perpendicular to the longitudinal axis A and is positioned between planes P1 and P2.

The peripheral front male locking portion 227 comprises an outer peripheral wall 227a of conical shape that surrounds the central front locking cavity 226. The apex 227b of this conical outer peripheral wall 227a is oriented towards the lock ring 11, and is extended by a front wall 227c defining a fourth plane P4 perpendicular to the longitudinal axis A. As shown on figure 6, the total height H of the neck ring 22 is the distance between rear plane P1 and front plane P4.

The central locking cavity 226 is opened for partly inserting the lock ring 11 inside the cavity 226, and comprises more particularly a front opening 226d that is oriented towards the opposite lock ring 11. This front opening 226d is provided in the front wall 227c of the front male locking portion 227.

The base of the conical outer wall 227a of the front male locking portion 227 is oriented towards the neck ring 22 and is extended by an annular front wall 228 that forms a fifth plane P5. This fifth plane P5 is perpendicular to the longitudinal axis A and is positioned between planes P4 and P2.

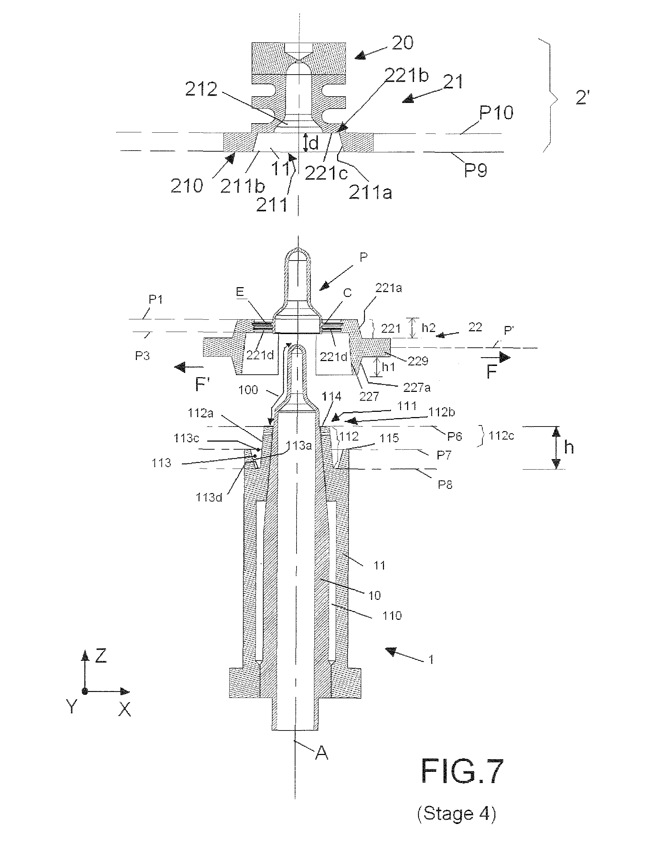

In the particular example of figure 6, each half neck ring 22a of the neck ring 22 comprises an outer central protruding part 229 extending between plane P2 and P5. Theses parts 229 of the half neck rings 22a are each assembled with a hydraulic or pneumatic jack (not shown). These jacks are used for either moving laterally apart (figure 4/ arrows F, F')the half neck rings 22a into the opened position of figure 7, or on the contrary for pushing and moving laterally closer the half neck rings 22a in the locked position of figure 4.

In reference to figure 7, the rear male locking portion 221 of the neck ring 22 comprises also an inner lateral wall 221 d that is delimited by planes P1 and P3 and that is adapted to form the neck portion E of the preform P. In this particular example, the neck support ring C of the preform is completely encapsulated in the male locking portion 221 of the neck ring 22. In another variant, the supporting face of the neck support ring C that is used for supporting the preform in the blowing mould could be positioned in plane P1, i.e. at the transition between the neck ring 22 and the cavity insert 21.

### Lock ring 11

In reference to figure 7, the lock ring 11 is a tubular piece comprising a longitudinal channel 110 that is opened at both ends and is adapted for housing the core 10. The core 10 is inserted within the channel 110 of the lock ring 11 and is rigidly assembled with the lock ring 11, in order to form a monolithic core assembly 1, and in such a way that the rear part 100 of the core 10 is protruding outside the rear end 111 of the lock ring 11 (end 111 of the lock ring 11 oriented towards the neck ring 22).

In reference to figure 7, the lock ring 11 comprises a central rear male locking portion 112 and a rear annular cavity 113 surrounding the said central rear male locking portion 112.

The central rear male locking portion 112 comprises an outer peripheral wall 112a of conical shape that is aligned with the central longitudinal axis A. The taper angle of the conical wall 112a of the central rear male locking portion 112 of the lock ring 11 is equal to the taper angle of the conical lateral wall 226a of the central front locking cavity 226 of the necking 22.

The apex 112b of the central rear male locking portion 112 is oriented towards the neck ring 22, and is extended by a rear wall 114 forming a plane P6 perpendicular to the longitudinal axis A.

The rear annular cavity 113 comprises a lateral wall 113a of conical shape surrounding the central rear male locking portion 112. The taper angle of this conical lateral wall 113a is equal to the taper angle of the outer peripheral conical wall 227a of the peripheral front male locking portion 227 of the neck ring 22.

The base of this lateral wall 113a of conical shape is oriented towards the neck ring 22 and is extended by an annular rear wall 115 surrounding the cavity 113 and forming a plane P7 perpendicular to the longitudinal axis A.

The rear annular cavity 113 comprises an annular opening 113c in rear wall 115. Said annular opening 113c is oriented towards the neck ring 22 and is adapted for inserting the front male locking portion 227 of the neck ring 22 inside the annular cavity 113.

The bottom wall 113d of the annular cavity 113 forms a plane P8, that is perpendicular to the longitudinal axis A.

In the particular embodiments depicted on the appended figures, the central rear male locking portion 112 of the lock ring 11 preferably comprises a protruding part 112c (see e.g. figure 7) that protrudes outside the rear annular cavity 113 towards the neck ring 22. This protruding part 112c corresponds to the part of the rear male locking portion 112 that extends between planes P6 and P7.

In another variant however, the rear male locking portion 112 can be completely surrounded on is whole height h (i.e. distance between planes P6 and P8) by the rear annular cavity 113, and in such a case the rear male locking portion 112 is not protruding outside the annular cavity 113.

The geometry and dimension of the rear annular cavity 113 of the lock ring 11 are adapted to the geometry and dimension of the peripheral front protruding locking portion 227 of the neck ring 22, and the geometry and dimension of the central rear male locking portion 112 of the lock ring 11 are adapted to the geometry and dimension of the central front locking cavity 226 of the neck ring 22 for aligning (longitudinal axis A) and locking the core assembly 1 with the neck ring 22 in plane (X,Y) and in the longitudinal direction Z.

### Cavity insert 21

In reference to figure 7, the cavity insert 21 comprises a front wall 210 oriented towards the neck ring 22 and an opened central front locking cavity 211 aligned with central longitudinal axis A. The front wall 210 defines a plane P9 perpendicular to the central longitudinal axis A. The central front locking cavity 211 comprises a lateral wall 211 a of conical shape and a front opening 211d in the front wall 210 for inserting the central rear male locking portion 221 of the neck ring 22 in the central front cavity 211. The taper angle of this lateral wall 211 a of conical shape is equal to the taper angle of the outer conical wall 221 a of the central rear male locking portion 221 of the lock ring 22.

The apex 211 b of the conical wall 211 a of the cavity 211 is oriented towards the gate insert 20 and is extended by a wall 211 c (bottom wall of locking cavity 211) that is perpendicular to longitudinal axis A and defines an assembling plane P10. The cavity 211 is extended in the longitudinal direction (Z) by a central channel 212 having a geometry adapted to form the body of the preform P.

### Locking and unlocking operations

The locking and unlocking operations of the core assembly 1 with the cavity assembly 2 are now going to be explained. The cavity insert 21 and gate insert 20 are assembled as depicted on figures 5 to 8 in order to form a monolithic assembly 2' that is always fixed during the locking or unlocking operations of the core assembly 1 with the cavity assembly 2.

### Locked state - figure 4

Figure 4 shows the injection mold stack IMS in its locked state. In this locked state of figure 4, the neck ring 22 has been translated longitudinally (arrow F1) in such way that the conical central rear male locking conical portion 221 of the neck ring 22 is fitted into the conical central locking cavity 211 of the cavity insert 21. During this insertion translation movement of the neck ring 22, the conical outer wall 221 a of each half neck ring part 22a is in contact with and is guided by the conical lateral wall 211 a of the cavity 211 and the neck ring 2 is thus perfectly aligned with the cavity insert 21.

The depth d (figure 7) of the cavity 211 is dimensioned in such a way that in this locked state the front wall 223 of the rear male locking portion 221 of the neck ring 22 abuts against the bottom wall 211 c of cavity 211 (planes P1 and P10/ figure 4).

In the locked state, the neck ring 22 is immobilized by the conical lateral wall 211 a of the central front locking cavity 211 of the cavity insert 21 in all directions in plane (X, Y),and there is no risk of misalignment (axis A) of the neck ring 22 with the cavity insert 21. The neck ring 22 is immobilized in the longitudinal direction Z by the abutment bottom wall 221 c of the cavity insert in cooperation with the abutment front wall 223 of the neck ring 22.

In the locked state of figure 4, the core assembly 1 has been also translated longitudinally (arrow F1) in such a way that the conical rear male locking portion 112 of the lock ring 11 is fitted into the conical front locking cavity 226 of the neck ring 22, and the peripheral front male locking portion 227 of the neck ring 22 is fitted into the annular front cavity 113 of the lock ring 11. This fitting movement is performed until the rear wall 114 (plane P6) of the male locking portion 112 of the lock ring 11 abuts against the bottom wall 226 (plane P3) of the cavity 226 of the cavity insert 22, and the bottom wall 113d (plane P8) of the annular cavity 113 of lock ring 11 abuts against the front wall 226c (plane P4) of the lock ring 22.

During this fitting translation movement of the lock ring 11, the male locking portion 112 of the lock ring 11 is in contact with and is guided by the conical lateral wall 226a of the cavity 226 of the neck ring 22, and the conical lateral wall 113a of the annular locking cavity 113 of the lock ring 11 is in contact with and is guided by the conical wall 227a of the male locking portion 227 of the neck ring 22. In the locked state, the lock ring 11 is immobilized by neck ring 22 in all directions in plane (X,Y), and there is no risk of misalignment (axis A) of the lock ring 11 with the neck ring 22. The lock ring 11 is immobilized in the longitudinal direction by the neck ring 22, and the neck ring 22 is immobilized by the lock ring 11 in the longitudinal direction opposite to direction Z . As a result the lock ring 11 is thus perfectly aligned with the neck ring 22, and there is no risk of misalignment of the core assembly 1 with the neck ring 22.

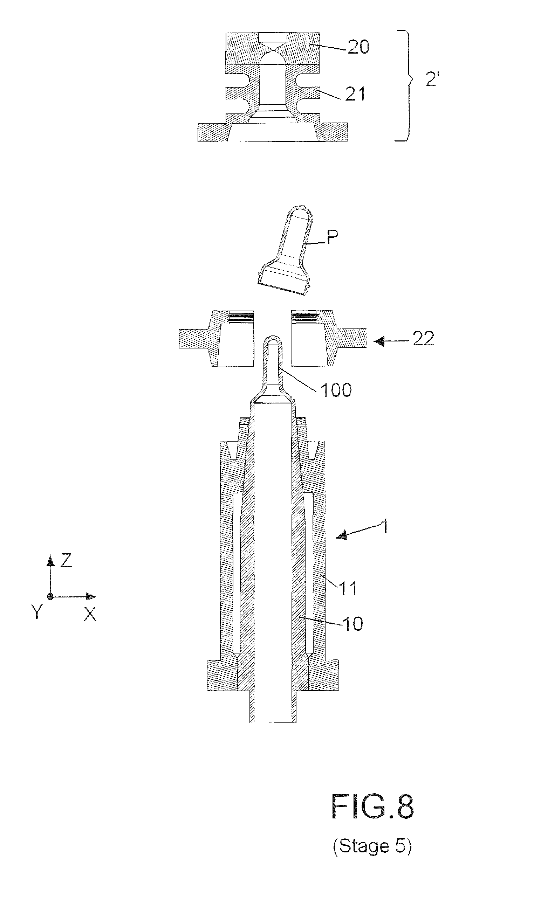

Once a thermoplastic material has been injected into the mold cavity MC through the gate insert 20 of the injection mold stack IMS of figure 4 (stage 1- locked state) and forms a solidified plastic preform P, the injection mold stack IMS in unlocked (stages 2 to 4 depicted on figures 5 to 7) and the cold molded preform P is ejected form the mold stack (stage 5 - figure 8).

### Unlocking operation

### From stage 1 (figure 4) to stage 2 (figure 5)

The assembly constituted by the neck ring 22 and the core assembly 1 (core 10/lock ring 11) is translated in the longitudinal direction (arrow F4) away from the fixed assembly 2'(cavity insert 21/gate insert 20). The preform P is pinched between the two half neck rings t 22a of the neck ring 22 and is thus withdrawn by the neck ring 22 outside the cavity insert 21 and gate insert 22.

### From stage 2 (figure 5) to stage 3 (figure 6)

The core assembly 1 (core 10/lock ring 11) is translated in the longitudinal direction (arrow F4) away from the neck ring 22 that still holds the preform P, in order to withdraw the part 100 of the core 10 from the preform P

### From stage 3 (figure 6) to stage 4 (figure 7)

This withdrawal movement of the core 10 is performed until (stage 4- figure 7), the protruding part 100 of the core 10 is positioned completely outside the preform P. Then the two half neck rings 22a of the neck ring 22 are moved laterally away one from the other (figure 7/ arrows F and F') in order to open the neck ring 22 and to free the preform P from the neck ring 22.

### Stage 5- Figure 8 : The preform P is ejected from the neck ring 22

### Locking operation

The locking operation of the injection mold stack is performed (from stage 5 of figure 8) by pushing laterally the two half neck rings 22a of the neck ring 22 towards each other, in such a way to close the neck ring 22 (position of the two half neck rings 22a shown on figure 6).

Then (configuration of figure 5 without the preform P) the core assembly 1 is moved longitudinally in order to fit the male locking portion 112 of the lock ring 11 into the locking cavity 226 of the neck ring 22 and in order to fit the front male locking portion 227 of the neck ring 22 into the annular locking cavity 113 of the lock ring 11.

Then the assembly constituted by the core assembly 1 (core 10/lock ring 11) and the closed neck ring 22 is pushed longitudinally towards the fixed assembly 2' (cavity insert 21/gate insert 20) in order to introduce the protruding part 100 of the core 10 inside the cavity insert 21 and gate insert 20, until the rear male locking portion 221 of the neck ring 22 is completely inserted in abutment inside the locking cavity 211 of the cavity insert 21 (Locked state of figure 4 without the preform P).

### Height H of the neck ring 22

Referring to figure 6, the height H of the neck ring 22 is not depending on the preform length L or design. The sole design constraint for the neck ring 22 in connection with the preform P is the design and dimension of the internal wall 221d (figure 7) of the rear male locking portion 221 for forming the neck portion E of the preform P. Consequently, the same neck ring 22 of the injection mold stack IMS of the invention can be used advantageously with different cavity inserts and gate inserts for making different types of preforms (preforms having the same neck portion E but having different lengths L or different body B geometries or different bottom end D geometries) without modifying the neck ring 22, and in particular without increasing the height H of the neck ring 22. This neck ring 22 can thus advantageously be compact (small height H) even for making long preform.

### Symmetry of the neck ring 22

In reference to figure 7, the neck ring 22 of the invention can be easily designed in such a way the height h1 of the front male locking portion 227 is substantially equal to the height h2 of the rear male locking portion 221 and in such a way that the conical wall 221 a of the rear male locking portion 221 and the conical wall 227a of the male locking portion 227 are substantially symmetrical about a central transverse plane P' that is perpendicular to the longitudinal axis A.

As a result, the locking force that is applied directly on the central holding portion 229 of the half neck rings 22a for closing the neck ring 22 is distributed substantially uniformly on each side of transverse plane P, which leads to a better and well balanced translation movements of the two half neck rings 22a during the locking operations. In addition, the mechanical forces applied between the neck ring 22 and the cavity insert 21 and between the neck ring 22 and the lock ring 11 are well balanced, which reduces advantageously the wear of the neck ring 22, cavity insert 21 and lock ring 11.

Furthermore, in the injection molding stack IMS of the invention, the areas of the contact surfaces (226a and 112a) between the neck ring 22 and the lock ring 11 can be advantageously high, without a strong prejudice for the compactness of the neck ring. This means that a low locking pressure exerted onto the two neck rings 22a of the neck ring 22 can be advantageously transformed into a high clamping forces applied on the lock ring 11 by the two half neck rings 22a of the neck ring.22. The injection mold stack of the invention can thus be used with less hydraulic or pneumatic energy.

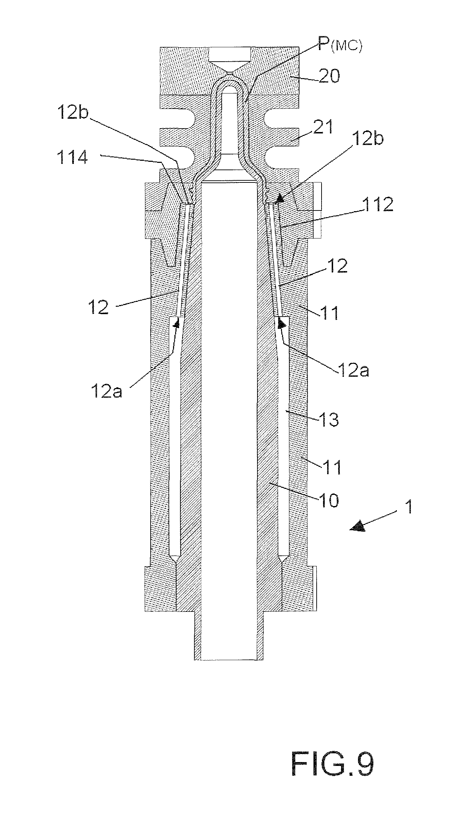

### Preform ejection - air-blowing channels- Figures 9

Optionally, in reference to figure 9, the lock ring 11 comprises air-blowing channels 12. In the particular embodiment of figure 9, these channels 12 are drilled through the lock ring 11, and more especially through the rear male locking portion 112. Each air-blowing channel 12 is opened at both end and thus comprises an inlet opening 12a for the admission of air in the channel 12 and an outlet opening 12b for the blowing of air outside the channel 12. The inlet opening 12a is communicating with the internal chamber 13 delimited inside the core assembly 1 between the core 10 and the lock ring 11. The outlet opening 12b is made in the front wall 114 of the male locking portion 112.

In operation, for assisting the preform ejection (stage 6- figure 7), air under pressure is introduced inside the internal chamber 13 of the core assembly 1. This air under pressure penetrates inside the air-blowing channels 12 via the inlet openings 12a and is blown outside the air-blowing channels 12 via the outlet openings 12b, in the form of air jets of high velocity oriented towards the neck portion E of the preform P.

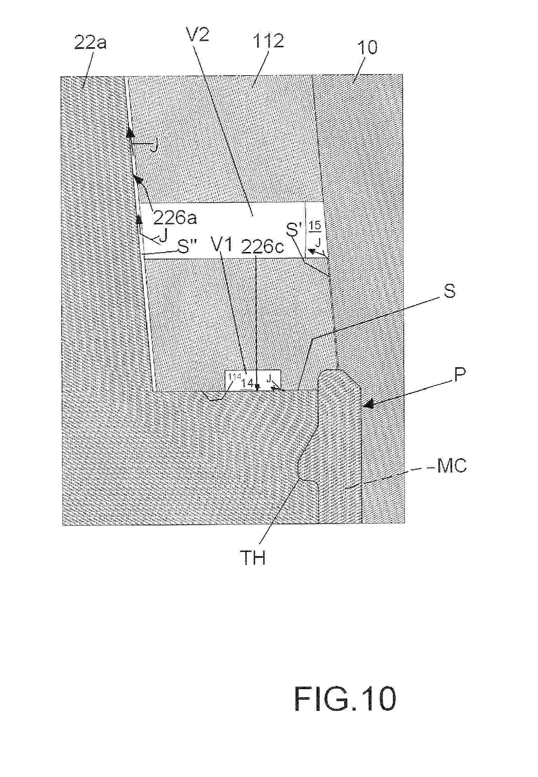

### Figure 10 - vents

In reference to the enlargement view of figure 10, the injection mold stack comprises for each half neck rings 22a two venting channels V1, V2 for escaping air from the mold cavity MC into the outside of the injection mold stack, during the injection stage of the thermoplastic material in the mold cavity (MC).

The venting channel V1 comprises a groove 14 made in the rear wall 114 of the rear male locking portion 112 that is facing the bottom wall 226c of the front locking cavity 226 of the neck ring 22. The venting channel V1 also comprises a small space S that is provided between this bottom wall 226c and the rear wall 114. The groove 14 communicates with the mold cavity MC through this small space S. The groove 14 also communicates with the outside of the injection mold stack through a groove (not shown) made in the half neck ring 22a.

The venting channel V2 comprises a hole15 that is drilled trough the rear male locking portion 112, and that is opened at both ends, and tow spaces S', S'. At one end, this hole 15 communicates with the mold cavity MC through the small space S' that is provided in this particular embodiment between the core 10 and rear male locking portion 112 of the lock ring 1. At the opposite end , this hole 15 communicates with the outside of the injection mold stack IMS through the space S" that is provided between the rear male locking portion 112 and the conical lateral wall 226a of the front locking cavity 226 of the neck ring 22.

In operation, when the thermoplastic material is injected in the mold cavity MC through the gate insert 20, the thermoplastic material pushes the air contained in the mold cavity MC, and this air escapes from the mold cavity MC into the outside of the injection mold stack IMS through the venting channels V1, V2 (Figure 10 / air flows represented by arrows J).

### Figure 11

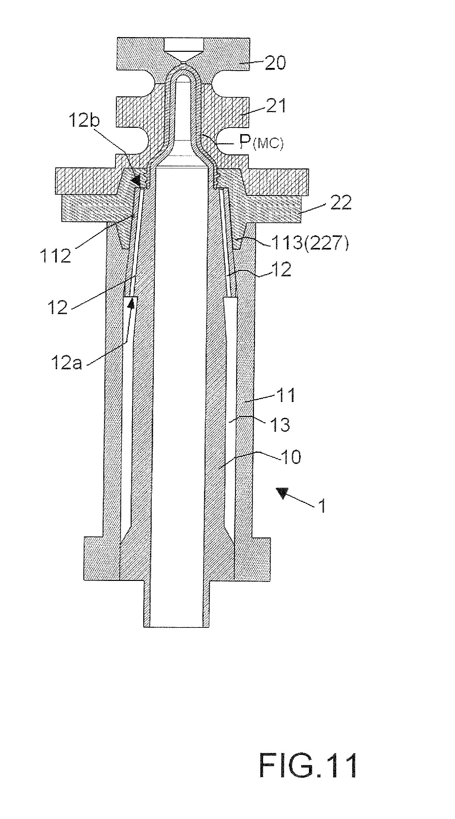

Figure 11 shows another variant of an injection mold stack of the invention wherein the rear annular cavity 113 is in the lock ring 11 of the core assembly 1, but wherein the conical rear male locking portion 112 of the core assembly 1 is not a part of the lock ring 11 (like in the embodiment of figure 4) but is a part of the central core 10 of the core assembly 1.

### Figure 12

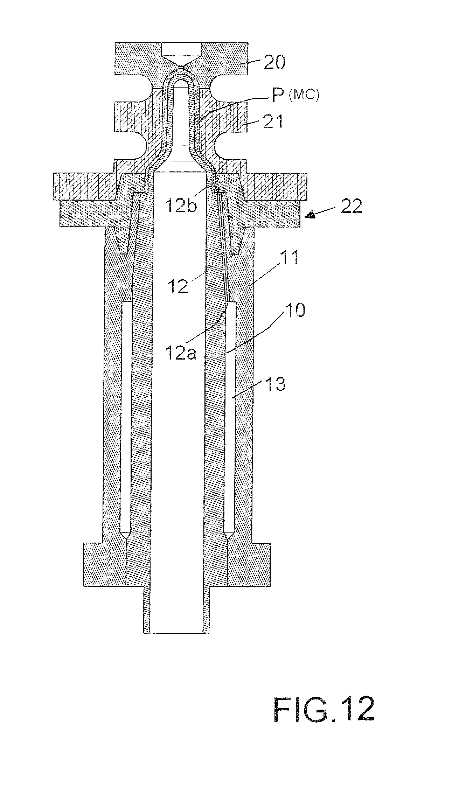

Figure 12 shows another variant of an injection mold stack of the invention, wherein an air-blowing channel 12 for assisting the preform ejection is delimited by the outer face of the central core 10 and by a groove made in the inner face of lock ring 11.

## Claims

1. An injection mold stack (IMS) comprising a core assembly (1) and a cavity assembly (2), wherein at least a portion (100) of the core assembly (1) is adapted to delimit a molding cavity (MC) with the cavity assembly (2), wherein the cavity assembly (2) comprises a cavity insert (21) and a neck ring (22) that is positioned between the cavity insert (21) and the core assembly (1), wherein the cavity insert (21) comprises a first front locking cavity (211) comprising a front opening (211d) oriented towards the neck ring (22), and a lateral wall (211 a) of conical shape whose apex (211 b) is oriented towards the gate insert (21), wherein the neck ring (22) comprises a first rear male locking portion (221) comprising an outer wall (221 a) of conical shape whose apex (221 b) is oriented towards the cavity insert (21), wherein the said neck ring (22) comprises a second front locking cavity (226) and a front male locking portion (227), wherein the second front locking cavity (226) comprises a front opening (226d) oriented towards the core assembly (1), and a lateral wall (226a) of conical shape whose apex (226b) is oriented towards the cavity insert (21), wherein the front male locking portion (227) comprises an outer wall (227a) of conical shape, whose apex (227b) is oriented towards the core assembly (1), and that surrounds the second front locking cavity (226), wherein the core assembly (1) comprises a second rear male locking portion (112) and a rear annular cavity (113), wherein the second rear male locking portion (112) comprises an outer wall (112a) of conical shape whose apex (112b) is oriented towards the neck ring (22), wherein the rear annular cavity (113) surrounds the said second rear male locking portion (112), and comprises an annular opening (113c) oriented towards the neck ring (22), and a lateral wall (113a) of conical shape whose base is oriented towards the neck ring (22), wherein the first conical rear male locking portion (221) and the first conical front locking cavity (211) are adapted to align and lock the neck ring (22) with the cavity insert (211) by translating longitudinally the neck ring (22) towards the cavity insert (21) or vice versa, so that the first conical rear male locking portion (221) is fitted into the first conical front locking cavity (211), and wherein the second conical front locking cavity (226), the conical front male locking portion (227), the second conical rear male locking portion (112) and the conical annular rear cavity (113) are adapted to align and lock the core assembly (1) with the neck ring (22) by translating longitudinally the core assembly (1) towards the neck ring (22) or vice versa, so that the second conical rear male locking portion (112) is fitted into the second conical front locking cavity (226) and the conical front male locking portion (227) is fitted into the conical rear annular cavity (113).

2. The injection mold stack (IMS) of claim 1, wherein the second conical rear male locking portion (112) comprises a protruding part (112c) that protrudes outside the conical rear annular cavity (113) and towards the neck ring (22).

3. The injection mold stack (IMS) of claim 1 or 2, wherein the height (h1) of the front male locking portion (227) is substantially equal to the height (h2) of the first rear male locking portion (221).

4. The injection mold stack (IMS) of claim 3, wherein the conical outer wall (221 a) of the first rear male locking portion (221) and the conical outer wall (227a) of the front male locking portion (227) are substantially symmetrical about a central transverse plane (P') that is perpendicular to a longitudinal alignment axis A of the injection mold stack.

5. The injection mold stack (IMS) of any one of claims 1 to 4, wherein the neck ring (22) comprises two half neck rings (22) that can be moveable laterally in such a way to form a closed or opened neck ring (22).

6. The injection mold stack (IMS) of any one of claims 1 to 5, wherein the core assembly (1) comprises at least one air-blowing channel (12) that is adapted to blow an air jet towards the neck ring (22) for assisting the ejection of a molded article.

7. The injection mold stack (IMS) of claim 6, wherein the at least one air-blowing channel (12) is made through the second conical rear male locking portion (112) of the core assembly (1).

8. The injection mold stack (IMS) of any one of claims 1 to 7, wherein the core assembly (1) comprises a central core (10) surrounded by an external lock ring (11), and wherein the second conical rear male locking portion (112) of the core assembly (1) is a part of the lock ring (11) and the rear annular cavity (113) is in the lock ring (11).

9. The injection mold stack (IMS) of any one of claims 1 to 7, wherein the core assembly (1) comprises a central core (10) surrounded by an external lock ring (11), and wherein the second conical rear male locking portion (112) of the core assembly (1) is a part of the central core (10) and the rear annular cavity (113) is in the lock ring (11 ).

10. The injection mold stack (IMS) of any one of claims 1 to 9, further comprising venting channels (V1, V2) for escaping air from the mold cavity (MC) and towards the outside the injection mold stack during the injection of thermoplastic material in the mold cavity (MC).

11. The injection mold stack (IMS) of claim 10, wherein at least one venting channel (V1) comprises a groove (14) made in a rear wall (114) of the second rear male locking portion (112) that is facing the bottom wall (226c) of the second front locking cavity (226).

12. The injection mold stack (IMS) of any one of claims 10 or 11, wherein at least one venting channel (V1) comprises a hole (15) drilled through the second rear male locking portion (112).

13. A neck ring (22) of an injection mold stack (IMS), said neck ring (22) comprises a rear side and an opposite front side, wherein the said neck ring (22) comprises on its rear side a rear male locking portion (221) comprising an outer wall (221 a) of conical shape whose apex (221 b) is oriented towards the rear side, wherein said neck ring (22) comprises on its front side a front locking cavity (226) and a front male locking portion (227), wherein the front locking cavity (226) comprises a front opening (226d) and a lateral wall (226a) of conical shape whose apex (226b) is oriented towards the rear side, wherein the front male locking portion (227) comprises an outer wall (227a) of conical shape, whose apex (227b) is oriented towards the front side of the neck ring (22), and that surrounds the front locking cavity (226).

14. The neck ring of claim 13, wherein the height (h1) of the front male locking portion (227) is substantially equal to the height (h2) of the rear male locking portion (221).

15. The neck ring of claim 14, wherein the conical outer wall (221 a) of the rear male locking portion (221) and the conical outer wall (227a) of the front male locking portion (227) are substantially symmetrical about a central transverse plane (P') that is perpendicular to a longitudinal alignment axis A of the neck ring.

16. The neck ring of any one of claims 13 to 15, wherein the neck ring (22) comprises two half neck rings (22) that can be moveable laterally in such a way to form a closed or opened neck ring (22).

17. A core assembly (1) of an injection mold stack (IMS) wherein the core assembly (1) comprises a rear side and an opposite front side, wherein the core assembly (1) comprises on its rear side a rear male locking portion (112), a rear annular cavity (113) and a protruding portion (100) that is adapted to delimit a molding cavity (MC), wherein the rear male locking portion (112) comprises an outer wall (112a) of conical shape whose apex (112b) is oriented towards the rear side, wherein the rear annular cavity (113) surrounds the said rear male locking portion (112), and comprises an rear annular opening (113c) and a lateral wall of conical shape whose base is oriented towards the rear side.

18. The core assembly of claim 17, further comprising at least one air-blowing channel (12) that is adapted to blow an air jet for assisting the ejection of a molded article.

19. The core assembly of claim 18, wherein the at least one air-blowing channel (12) is made through the conical rear male locking portion (112) of the core assembly (1).

20. The core assembly of any one of claims 17 to 19, comprising a central core (10) surrounded by an external lock ring (11), and wherein the conical rear male locking portion (112) of the core assembly (1) is a part of the lock ring (11) and the rear annular cavity (113) is in the lock ring (11).

21. The core assembly of any one of claims 17 to 19, comprising a central core (10) surrounded by an external lock ring (11), and wherein the conical rear male locking portion (112) of the core assembly (1) is a part of the central core (10) and the rear annular cavity (113) is in the lock ring (11).

22. The core assembly of any one of claims 17 to 21, comprising a groove (14) for escaping air, said groove (14) being made in a rear wall (114) of the second rear male locking portion (112).

23. The core assembly of any one of claims 17 to 22, comprising a hole (15) for escaping air, said hole (5) being made through the second rear male locking portion (112) and being opened at both ends.

24. A molding apparatus comprising an injection mold stack (IMS) of any one of claims 1 to 12, and an injection unit for injecting a melted thermoplastic material in the mold cavity (MC) of the injection mold stack (IMS).

25. The use of the injection mold stack (IMS) of any one of claims 1 to 12 or of the molding apparatus of claim 24 for molding a plastic article, and more particularly a plastic preform (P).
